# EUROPEAN PATENT APPLICATION

(11) **EP 3 693 079 A1**
(43) Date of publication of application: **12.08.2020**
(21) Application number: 19219513.9
(22) Date of filing: 23.12.2019
(51) Int. Cl.: B01D 53/96, B01D 41/04, B01D 46/00, F01N 3/023

(54) **CLEANING APPARATUS OF EXHAUST ASSEMBLIES OF MOTOR VEHICLES AND RELATED CLEANING METHOD**

(30) Priority: 01.02.2019 IT 201900001509
(71) Applicant: Nuova A.F.R. Air Filter Recycling S.R.L., 20060 Pessano con Bornago (MI) (IT)
(72) Inventor: LISANTI, Mario, 20060 PESSANO CON BORNAGO (MI) (IT)
(74) Representative: Biesse S.r.l.

(57) **Abstract**

An apparatus is described for cleaning exhaust assemblies of motor vehicles, once separated from the respective vehicles. The apparatus comprises a booth able to be opened and delimiting an inner volume from the surrounding environment and a containing tank to contain a detergent liquid housed in the booth. In the containing tank the exhaust assembly to be cleaned can be immersed and a through-hole is obtained through the booth. Advantageously, in the through-hole external feeding means to feed a washing flow, for example air fed by a blower, can be removably and with clearance inserted through the exhaust assembly immersed in the containing tank, or from which one end of the exhaust assembly immersed in the containing tank can protrude.

Such apparatus allows exhaust assemblies of motor vehicles, longer than the length of the apparatus itself, to be cleaned.

## Description

### Field of the Invention

The present invention relates to a cleaning apparatus and a related cleaning method for exhaust assemblies once removed, i.e. separated, from the respective motor vehicles. Specifically, it relates to an apparatus and a method for regenerating particulate filters of diesel vehicles.

### State of the Art

Presently most of the motor vehicles are provided with catalyser devices that convert the noxious gases produced during the combustion, such as hydrocarbons (CₙHₘ), nitrogen oxides (NOₓ) and carbon monoxide (CO), into carbon dioxide (CO₂), water (H₂O) and molecular nitrogen (N₂).

In vehicles provided with a diesel engine, such as cars, vans or trucks, downstream of the catalyser device also a particulate filter is mounted having the purpose of intercepting and trapping the particle pollutants, such as fine particles, generated by the burning of gas oil.

Particulate filters generally comprise a porous body made of silicon carbide and provided with a first inlet end for the combustion gases coming from the catalyser device, and with a second outlet end that allows the combustion gases to be conveyed to the exhaust pipe through the exhaust duct.

For the purposes of the present description, by exhaust assembly the assembly consisting of both the exhaust duct and the particulate filter is meant.

Precisely by virtue of the presence of the particulate filter, the combustion gases enter the exhaust duct depleted of the particulate pollutants that remain trapped indeed in the pores of the filter itself.

To avoid that, by increasing the mileage traveled, the particles build up in such amounts to cause the filter clogging, a regeneration process has been provided that, at least partially, is able to remove the particles trapped while the vehicle is moving.

Specifically, the particulate filters are periodically subjected, in practice every 600-1.000 Km, to a partial regeneration process. During this process a post-injection of gas oil in the filter occurs that allows a temperature of 450 °C to be reached. At this temperature, the cerium-catalyzed combustion occurs of the particles trapped in the filter whose residuals are then released in the environment together with the remaining exhaust gases.

Such regeneration is however unsuccessful when the mileage traveled by the motor vehicle exceeds about 150.000 Km: the above described regeneration process can not completely remove the particles trapped in the filter, that build up over time. For this reason, more effective regeneration apparatuses and methods had to be designed.

These regeneration methods generally provide for inputting in the particulate filter a detergent mixture of water and/or air to make a real filter cleaning and remove most of the particles trapped without the latter being directly released in the air.

Usually these methods are carried out on the particulate filter or the exhaust assembly once removed from the vehicle.

In this regard the Applicant filed the Patent Application EP 2500078 directed to a method and an apparatus for regenerating, at least partially, a particulate filter of a motor vehicle.

In particular, the method described in the above mentioned Patent Application provides to feed a mixture of washing liquid and gas, preferably air, at the second end of the particulate filter such as to clean the filter just by means of the synergistic effect provided by the liquid and the air mixed together (biphasic fluid).

The particles are therefore separated from the filter by means of the used mixture and, by remaining suspended in the washing liquid used for cleaning, are taken away from the particulate filter through the first end thereof.

Other cleaning methods for filters provide for immersing the particulate filters in a detergent liquid that makes the filter regeneration process more effective. For this reason, the apparatuses according to the known art that allow this regeneration method comprise a tank to collect the detergent liquid wherein the particulate filter is immersed. In some solutions the filters or exhaust assemblies immersed in the detergent liquid are also subjected to ultrasound cleaning.

WO 2015/008443 describes an apparatus, and a related method, for regenerating the filters used during the display resistor cleaning. The apparatus comprises a tank provided with a plurality of supports on which the filters and a feeding duct are positioned to feed the washing liquid that connects each support to a pump positioned outside the tank. In practice, the feeding duct crosses the tank wall at a through-hole obtained in the underside of the tank itself, under the level the washing liquid can reach. The feeding duct is irremovably and fixedly inserted in the respective hole.

Patent application US 2003/0079607 describes an apparatus and a related method for cleaning particulate filters of motor vehicles. As in the case of document WO 2015/008443, the apparatus comprises a tank in which, on respective supports, the filters to be washed are placed. The washing liquid is fed to the filter to be washed through a duct that is irremovably and fixedly inserted through a corresponding through-hole obtained on the tank bottom.

In practice, the conventional solutions provide for the feeding duct of the washing liquid to always remain inserted, during the normal useful life of the apparatus, in the respective through-hole obtained in the tank, without the possibility of releasing or reinserting the same as requested; therefore the feeding duct always remains combined with the apparatus.

Other solutions are described in US 3,888,694 and WO 03/093659.

As mentioned above, the particulate filters are generally combined with the respective exhaust duct and form on the whole an exhaust assembly whose length can vary depending on the model of the vehicle they are mounted on.

The exhaust assemblies can thus have sizes from 40 cm to 350 cm and for this reason the cleaning apparatuses according to the known art are made with such lengths to allow longer exhaust assemblies to be housed and immersed in the tank.

In practice the devices according to the known art are made with a tank whose length is larger than the maximum length of the exhaust assemblies to be cleaned. In practice, the devices according to the know art to clean exhaust assemblies of 350 cm must have a length at least longer than this size.

A first drawback is that these apparatuses, precisely in order to allow longer length exhaust assemblies to be housed, are bulky and heavy.

A second drawback is represented by the fact that, in order to fill big size tanks, a large volume of detergent liquid is required and this results in the corresponding sizing of the recirculation pumps also and higher production and maintenance costs. In addition, larger volumes of detergent result in higher disposal expenses.

### Summary of the Invention

It is an object of the present invention to provide a cleaning apparatus for exhaust assemblies, once separated from the respective vehicles, that is simple in the structure, compact and that allows reducing the costs related to the purchase and disposal of the detergent liquid.

In particular, it is an object of the present invention to provide a cleaning apparatus that allows the required compactness to be combined with the versatility of use on exhaust assemblies having different length.

Therefore, the present invention concerns an apparatus according to claim 1 to clean exhaust assemblies.

In particular, the apparatus comprises a containing tank for a detergent liquid in which the exhaust assembly can be immersed to be cleaned with a flow of air and/or liquid, called washing flow, fed through the exhaust assembly through means outside the apparatus, for example through a sleeve or an external piping.

Preferably, the washing flow consists of air and preferably the air is supplied by a blower; optionally the air is supplied by a compressor.

The liquid is defined detergent not since it necessarily contains a real detergent, i.e. a surfactant substance, but since it is able to promote the regeneration of the particulate filter of the exhaust assembly and improve the regeneration carried out by the external feeding means of a washing flow.

The containing tank is isolated from the outside since it is housed in a booth able to be opened: the tank can be a separate component with respect to the booth and either be housed inside the latter during the apparatus assembly, or, preferably, can be made in a single piece with the booth so as to be housed in the booth able to be opened also without being separated from the same.

For example, the booth can be made of steel, plastic or metal sheet already with a tank-shaped portion, such as to facilitate the apparatus assembly.

The apparatus essentially comprises a booth provided with a window that can be used to access the inner tank, to stow or take the exhaust assembly out; the window can be opened or closed according to the needs.

The apparatus comprises a through hole obtained through the booth and advantageously, in the through-hole there can be inserted, with clearance, either external feeding means of the washing flow fed through the exhaust assembly immersed in the tank, or one end of the exhaust assembly immersed in the tank, preferably the end opposite the particulate filter.

In practice, the through-hole allows the herein described apparatus to be used to clean an exhaust assembly having a length longer than the length of the apparatus itself, i.e. longer then the length of the respective tank, since, in this instance, one end of the exhaust assembly can protrude from the booth through the through-hole and be connected to the external feeding means of the washing flow, without this impairing the functioning of the apparatus. In fact, even if one end of the exhaust assembly protrudes from the booth through the just described through-hole, the remaining of the exhaust assembly remains immersed in the detergent liquid in the tank. In practice, the exhaust assembly remains tilted with the particulate filter immersed and one end of the exhaust pipe slipped on through the through-hole and connected, outside of the booth, to the external feeding means of the washing flow. In the apparatuses according to the known art, the exhaust assembly does not remain tilted inside the booth since, the exhaust assembly having a length smaller than the tank length, it remains in horizontal position during the whole cleaning process.

In case the exhaust assembly having a length smaller than the apparatus length is instead subjected to cleaning, it can be completely housed inside the booth, without any end of the exhaust assembly protruding outside thereof, and can be connected to the external feeding means of the washing flow inside the apparatus, by passing them right through the above described through-hole.

Essentially, the presence of the through-hole confers particular versatility of use to the apparatus since it allows the same apparatus to be used to clean exhaust assemblies having different lengths, while keeping little dimensions and the required compactness.

In fact, as mentioned above, in the hole obtained through the booth either the external feeding means of a washing flow or one end of the exhaust assembly can be removably and with clearance inserted, depending upon the circumstance. In other words, the herein described apparatus is designed for allowing the external feeding means of a washing flow or one end of the exhaust assembly to be inserted and released from the through-hole, also after every cleaning cycle, should it be necessary, and however multiple times during the useful life of the apparatus, by a simple manual movement by the operator, preferably without using tools.

The apparatus is arranged to allow that either the external feeding means of a washing flow or one end of the exhaust assembly to be easily, removably and with clearance inserted in the through-hole, meaning that the apparatus allows them to be displaced inside and outside the through-hole itself.

On the contrary, in the conventional apparatuses the external feeding means of the washing flow are irremovably and fixedly inserted in the respective through-hole obtained in the booth and, time-consuming operations are required in order to release them, for example in order to carry out maintenance operations. In practice in the conventional apparatuses, the external feeding means are inserted, also by using proper tools, in the respective through-hole during the machine implementation and remain inserted in the same along the whole useful life of the apparatus. In other words, the conventional apparatuses are not designed to allow the external feeding means to be inserted and released into/from the respective hole depending on the length of the exhaust assembly to be cleaned and, thus, still less, are not arranged to insert and release, preferably manually and without using tools, the external feeding means or one end of the exhaust assembly as required.

In view of what described it is therefore apparent the reason why in the through-hole the external feeding means of the washing flow or one end of the exhaust assembly can be inserted.

Of course, in order to allow this, the through-hole must have a diameter at least larger than the largest of the diameter of the external feeding means of the washing flow and the diameter of the end of the exhaust assembly that can be inserted in the same.

An advantage offered by the herein described apparatus is that it is more compact than the apparatuses according to the known art, since it can be made with a length smaller than that of the known apparatuses, the length of the exhaust assemblies to be cleaned being the same.

In other words, if the devices of the known art must necessarily have a length larger that the length of the exhaust assembly to be cleaned, the herein described apparatus can be made with a length smaller than the length of the exhaust assembly to be cleaned.

Of course, by making a more compact apparatus, a better handling of the working space can be obtained, with smaller bulks and the shipment and assembly operations thereof can be facilitated since the apparatus is lighter.

Another advantage is that the apparatus allows less detergent liquid to be used compared to the corresponding apparatuses according to the known art: in fact, it being more compact and having a smaller volume, the liquid containing tank also has reduced sizes; this surely allows the consumption and the production and disposal costs of the detergent liquid to be reduced.

Preferably, the external feeding means to feed the washing flow are able to be fastened to the exhaust assembly by means of a fitting.

Preferably, the through-hole is obtained through the side wall of the booth, above the level the detergent liquid in the containing tank can reach. In other words, the through hole is positioned above the free surface of the detergent liquid, i.e. above the maximum level. This characteristic allows that means ensuring the whole sealing against the detergent liquid in which the exhaust assembly is immersed need not necessarily be applied at the through-hole, just because, it being obtained above the maximum reachable level also in the case the exhaust assembly with larger size being immersed in the tank, there is no possibility for the detergent liquid to overflow from the through-hole.

Preferably the through-hole is circular, with a diameter of about 18 cm. Optionally, the through-hole can have a rectangular or square shape.

Less preferably the through-hole is obtained in the front window that seals the booth.

Preferably, the apparatus comprises a platform on which at least most of the length of an exhaust assembly can be laid. In practice, the platform has such a length that the exhaust assemblies can be entirely or partially positioned thereon. In fact, the exhaust assemblies with length larger than the platform length are only partially positioned on the latter, since they protrude by the remaining part outside the apparatus, through the through-hole.

Preferably the platform is alternately movable between a lowered position, at which the platform is immersed in the containing tank and the detergent liquid, when present, and a raised position, at which the platform is not immersed in the containing tank but above the level the detergent liquid reaches to facilitate the loading and unloading operations of the exhaust assemblies to be cleaned and cleaned already.

In practice, the platform is susceptible to upwards or downwards alternated movements so that the exhaust assembly possibly positioned on the same platform is immersed or emerged in/from the detergent liquid.

Preferably, the apparatus comprises a supporting and guiding structure to support and guide the platform and an actuator outside the tank. The actuator is connected to the platform by means of the supporting and guiding structure.

In practice the above described platform is laid on the supporting and guiding structure.

The presence of the supporting and guiding structure allows providing the apparatus with particular compactness since it allows both the actuator to be arranged in a juxtaposed position with the tank without a part thereof contacting the detergent liquid, and the actuator to be functionally connected to the platform such that the latter can be immersed in the detergent liquid.

Preferably the supporting and guiding structure comprises a first horizontal portion constrained to the actuator by fastening means, for example a nut, a second vertical portion immersible in the tank and a third horizontal portion supporting the platform.

In practice, the supporting and guiding structure has a second vertical portion that allows the actuator and the platform to be functionally connected; the actuator in fact can not be directly connected to the latter since the platform can be immersed in the detergent solution and the actuator is preferably not to be wet.

In practice, the actuator imparts to the supporting and guiding structure upwards or downwards movements that are transmitted to the platform.

It is apparent that, in case an exhaust assembly is on the platform, the downwards and upwards alternated movements of the actuator cause the immersion or emergence of the exhaust assembly in/from the detergent liquid.

Preferably the actuator is of pneumatic type, able to be connected to an external feeding line to feed compressed air, and comprising a piston susceptible to upwards and downwards movements responsive to the controls given by the pneumatic actuator itself.

The piston is constrained to the first portion of the supporting structure by the fastening means between a lowered position, at which the third portion of the supporting and guiding structure is immersed in the containing tank and the detergent liquid, when present, and a raised position, at which it is not immersed in the containing tank but is above the level the detergent liquid can reach.

In other words, when the piston moves downwards it drags the supporting and guiding structure downwards also so as to immerse the platform, and the exhaust assembly possibly positioned on the same, in the detergent liquid; whereas when the piston moves upwards it displaces the supporting and guiding structure upwards so as to cause the platform, and the exhaust assembly if present, to emerge from the detergent liquid.

Optionally the actuator is of electric type, connected to an external power supply line and provided with a worm gear that can rotate in a direction or the other responsive to the controls given by the electric actuator.

The worm gear is constrained to the first portion of the supporting and guiding structure such that, when the worm gear rotates in a first rotation direction, the supporting and guiding structure moves downwards, i.e. towards the bottom of the containing tank and, when the worm gear rotates in a second rotation direction opposite the first one, the supporting and guiding structure moves upwards, i.e. outside the containing tank and the detergent liquid, when present.

Preferably the apparatus comprises adduction means, discharge means of the detergent liquid and a recirculation and filtration system to recirculate and filter the detergent liquid and that allows the detergent liquid that leaves the discharge means to be re-used, after having being filtered.

Preferably the recirculation and filtration system comprises a recirculation pump to recirculate the detergent liquid in the system, and a filter that intercepts the particles suspended in the detergent liquid after the cleaning of the exhaust assembly.

In practice the pump generates the pressure to circulate the detergent liquid in the containing tank, in the discharge means and in the adduction means. The presence of this recirculation and filtration system allows the consumption of detergent liquid to be further reduced and the related costs to be contained.

Preferably the apparatus comprises a control unit and an overflow sensor of the detergent liquid; the overflow sensor is able to detect if the detergent liquid exceeds a preset level and send an alarm signal to the control unit to stop the adduction of additional liquid through the adduction means. Preferably the apparatus comprises a splash-shield cap positioned outside of the booth and at the through-hole, i.e. around the same. The splash-shield cap allows the overflow of drops of detergent liquid outside the apparatus to be reduced.

The cap can also be sealingly fitted on the external feeding means or one end of the exhaust assembly, at the through-hole, without compromising that they can be removably and with clearance inserted in the through-hole itself.

Preferably, the containing tank in which the exhaust assembly can be immersed has a length about half the length of the longest exhaust assembly immersible in the containing tank.

In other words, the containing tank has a length about half the maximum length of the exhaust assembly that can be cleaned by the herein described apparatus, i.e. that can be at least partially immersed in the containing tank to regenerate the particulate filter.

Preferably, the tank has a width of 150 cm and the length of the longest exhaust assembly immersible, at least with the particulate filter, in the containing tank is about 350 cm.

Preferably the exhaust assembly can be immersed in the containing tank in a tilted position.

In practice, when the exhaust assembly is connected to the external feeding means of a washing flow and is immersed in the containing tank, it is arranged in a tilted position inside the booth, since either it has one end connected to the external feeding means of a washing flow inside the booth, or it has one end connected to the external feeding means of a washing flow outside the booth, depending on the length of the exhaust assembly itself.

In a second aspect the present invention relates to a method for cleaning exhaust assemblies of motor vehicles. The method comprises the steps of:
a) providing an exhaust assembly removed from the respective vehicle;
b) housing the exhaust assembly in an apparatus for cleaning exhaust assemblies and comprising:
   - a booth able to be opened and delimiting an inner volume from the surrounding environment,
   - a containing tank housed in the booth, to contain a detergent liquid and in which the exhaust assembly to be cleaned can be immersed,
   - a through-hole obtained through the booth
c) connecting external feeding means to feed a washing flow to one end of the exhaust assembly;
d) immersing the exhaust assembly in the containing tank;
e) actuating the washing flow through the exhaust assembly.

Advantageously, step c) is carried out, inside the booth, by removably inserting, with clearance, the external feeding means of a washing flow through the through-hole from the outside of the booth, or alternatively, is carried out outside the booth by making one end of the exhaust assembly removably protrude, with clearance, through the through-hole.

Preferably, the external feeding means of a washing flow or one end of the exhaust assembly are manually inserted, without the use of respective tools, in the through-hole of the booth. In other words, preferably, the method provides that the external feeding means or one end of the exhaust assembly are manually inserted, removably with clearance by an operator, into the through-hole without the need of using auxiliary tools or causing ruptures in the booth.

Preferably, the end of the exhaust assembly protruding through the through hole is the end opposite that where there is the particulate filter.

The herein described method allows an apparatus to be used to clean exhaust assemblies having a length larger than the length of the apparatus itself and, for this reason, allows more compact, lighter apparatuses to be used, that cause less spatial volumes and allow less detergent liquid to be used compared to the known methods.

Differently from what occurs in the already known methods, during step d), the exhaust assembly is arranged tilted, and not horizontal, inside the containing tank, with at least the particulate filter immersed in the detergent liquid. This is just due to the presence of the through-hole that allows one end of the exhaust assembly to protrude outside the booth.

It is described the use of a through-hole achieved in an apparatus for cleaning exhaust assemblies of motor vehicles once separated from the respective vehicles: the apparatus comprises a booth able to be opened and delimiting an inner volume from the surrounding environment and a containing tank of a detergent liquid, which is housed in the booth and in which an exhaust assembly to be cleaned can be immersed.

The through-hole made through the above described booth can be used, depending on the length of the exhaust assembly to be cleaned, to removably and with clearance insert in the booth external feeding means of a washing flow that can be connected to one end of the exhaust assembly immersed in the tank, or to removably and with clearance make one end of the exhaust assembly immersed in the containing tank protrude outside the booth, for the connection to the external feeding means of a washing flow outside the booth.

### List of the figures

Further characteristics and advantages of the invention will be better highlighted by the review of the following detailed description of a preferred, but not exclusive, embodiment illustrated for illustration purposes only and without limitation, with the aid of the accompanying drawings, wherein:
- figure 1 shows a cross-sectional isometric view of a first assembly consisting of an apparatus for cleaning exhaust assemblies of motor vehicles according to the present invention in an initial use configuration and of an exhaust assembly of a first typology;
- figure 2 shows a cross-sectional side view of the assembly shown in figure 1;
- figure 3 shows a cross-sectional isometric view of the assembly shown in figure 1 with the apparatus in an intermediate use configuration;
- figure 4 shows a cross-sectional isometric view of the assembly shown in figure 1 with the apparatus in a final use configuration;
- figure 5 shows a cross-sectional side view of the assembly shown in figure 1 with the apparatus in a final use configuration;
- figure 6 shows a cross-sectional side view of a second assembly consisting of an apparatus in a final use configuration and an exhaust assembly of a second typology;
- figure 7 shows an isometric view of the assembly shown in figure 6 in an initial use configuration.

### Detailed description of the invention

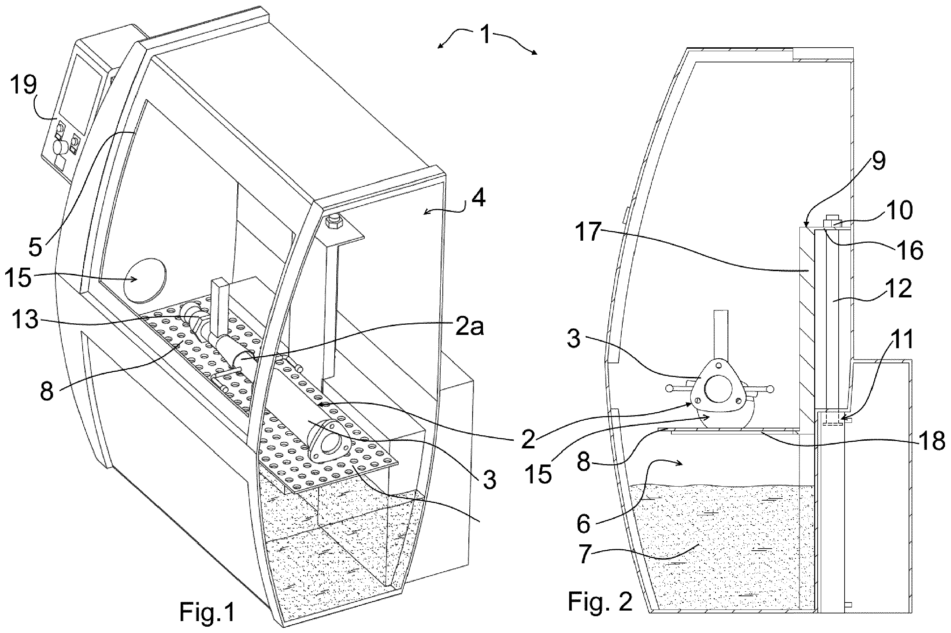

Figures 1-7 show an apparatus 1 for cleaning exhaust assemblies of motor vehicles denoted by the numeral references 2 and 2', respectively, in figures 1-5 and 6-7.

As it can be best appreciated by comparing these two figures, the exhaust assemblies 2 and 2' differ in their respective length: the exhaust assembly 2 has a length smaller than the exhaust assembly 2'; for example, the exhaust assembly 2 has a length of 40 cm and the exhaust assembly 2' has a length of 350 cm.

Specifically, the cleaning apparatus 1 allows regenerating the particulate filters 3, 3' of the exhaust assemblies 2, 2'; firstly the characteristics of the apparatus 1 will be described in connection with the cleaning of the exhaust assembly 2 and secondly the characteristics of the apparatus 1 in connection with the cleaning process of the exhaust assembly 2'.

As shown in figure 1, the apparatus 1 comprises a booth 4 able to be opened, in which the exhaust assembly 2 is stowed to be cleaned.

It can be noted that the exhaust assembly 2 is completely housed inside the apparatus 1; in other words, the apparatus 1 is made with such a length to accommodate the exhaust assembly 2 over its entire length. A fitting 13, whose function will be explained hereinafter, is furthermore fastened to the exhaust assembly 2, and in particular to its first end 2a, i.e. in a position opposite the particulate filter 3.

The booth 4 defines an inner volume with respect to the surrounding environment and communicates with the outside by means of a window 5 able to be opened, for allowing the exhaust assembly 2 either to be placed in the booth 4 itself before cleaning or to be removed at the end of the cleaning, or able to be closed to shield the operator from the splashes when the apparatus 1 is operating.

As it can be noted in figure 1, the apparatus 1 is provided with a control unit 19 that allows the cleaning steps and parameters to be adjusted for the exhaust assembly 2.

The cleaning apparatus 1 also communicates with the outside through a circular-shaped through-hole 15 obtained laterally in the booth 4 able to be opened. For example, the through-hole 15 can have a diameter of 18 cm.

The function of the through-hole 15 will be explained hereinafter in connection with the function of the fitting 13.

In figure 2 it can be seen that the apparatus 1 also comprises, in its underside, a containing tank 6 that can be filled with a detergent liquid 7 in which the particulate filter 3 can be immersed during the cleaning thereof.

In practice the containing tank 6 is housed in the booth 4 and is integrally made therewith, i.e. not separable from the booth 4 without causing structural and functional damages to the apparatus 1 itself.

The tank 6 is filled with the detergent liquid 7 through adduction means not shown in figures 1-7, and comes out through discharge means, also not shown in figures 1-7. The amount of detergent liquid 7, and thus the level it reaches in the tank 6, can be controlled by overflow sensors not shown in figures, that, when a preset threshold is reached, cause the stop of the adduction means or the opening of the discharge means by sending an alarm signal to the control unit 19.

The discharge and adduction means are connected through a recirculation and filtration system to recirculate and filter the detergent liquid, not shown in the figures.

Such a system comprises a pump and a filter and allows filtering the detergent liquid that comes out of the discharge means in which the particles from the cleaning of the exhaust assembly are suspended, and refilling the detergent liquid, free from such particles, in the tank 6. Of course, the pump has the function of generating the pressure needed to ensure the recirculation of the liquid in the system, and the filter that of intercepting the particles suspended in the detergent liquid 7 from the cleaning of the exhaust assembly 2.

It is furthermore possible to note that the cleaning apparatus 1 is also provided with a platform 8 on which the exhaust assembly 2 can be laid.

In the embodiment herein described, the platform 8 is pierced as it is shown in figure 1, i.e. it is provided with holes whose function will be clearer in the following.

Returning to figure 2, the platform 8 in turn rests on a supporting and guiding structure 9. The supporting and guiding structure 9 is constrained by fastening means 10, for example by a bolt, to a pneumatic actuator 11 at a piston 12. The pneumatic actuator 11 is positioned outside the booth 4 so as to prevent it from coming into contact with the detergent liquid 7 of the containing tank 6.

The supporting structure 9 has a first portion 16, substantially horizontal, constrained through the fastening means 10 to the piston 12, a second portion 17, substantially vertical and parallel to the rear wall of the tank 6, that isolates the piston 12 from the booth 4 able to be opened, and a third portion 18, substantially horizontal, on which the platform 8 is laid and that is immersible in the detergent liquid 7.

The pneumatic actuator 11 is connected to an external air line, not shown, and imparts, through the piston 12, upwards and downwards alternated movements to the supporting and guiding structure 9. Such alternated movements allow, once the exhaust assembly 2 has been positioned on the platform 8, the exhaust assembly 2, and in particular the particulate filter 3, either to be immersed in the detergent liquid 7 or to be extracted once the cleaning is ended.

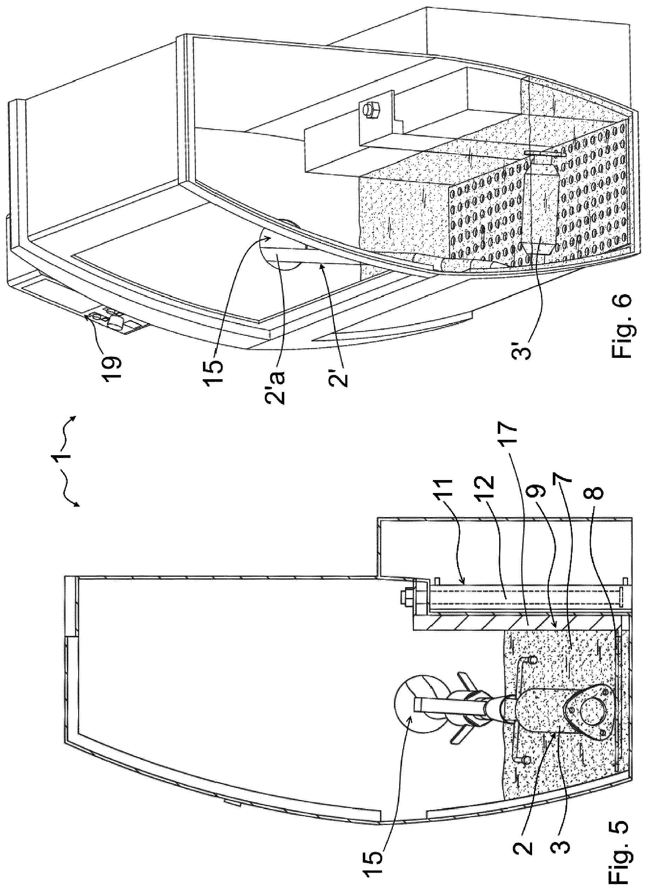

The different positions taken by these components during the downwards or upwards alternated movements can be described by comparing figure 2 with figure 5. Figure 2 shows the supporting and guiding structure 9 in a raised position and the exhaust assembly 2 positioned on the platform 8 above the level of the detergent liquid 7; in this initial use configuration the piston 12 is in a position completely withdrawn from the pneumatic actuator 11 and the exhaust assembly 2 is not immersed in the detergent liquid 7 but is above the level thereof.

Figure 5 shows on the contrary the apparatus 1 in final use configuration with the supporting and guiding structure 9 in lowered position and the exhaust assembly 2 with the particulate filter 3 immersed in the detergent liquid 7; in this configuration the piston 12 is in position withdrawn in the pneumatic actuator 11.

In its downwards and upwards movements, the supporting and guiding structure 9 slides with its second portion 17 along the rear wall of the booth 4; in addition the conformation itself of the supporting and guiding structure 9, above described, provides the cleaning apparatus 1 with particular compactness since it allows the pneumatic actuator 11 and the tank 6 to be positioned in juxtaposed position to one another while remaining respectively isolated. In fact, the presence of the second portion 17 of the supporting and guiding structure 9 allows covering the distance between the bottom of the tank 6 and the top of the pneumatic actuator 11 thus ensuring that the piston 12 is isolated from the booth 4.

In the light of what described above, it is apparent that the platform 8 is pierced, as previously mentioned, to reduce the drag caused by the detergent liquid 7 in the downwards and upwards movements of the platform in the detergent liquid 7 itself.

As it can finally be noted from figure 2, the through-hole 15 is obtained in the booth 4 substantially flush with the platform 8 in a raised position and, however, at a height above the level of the detergent liquid 7.

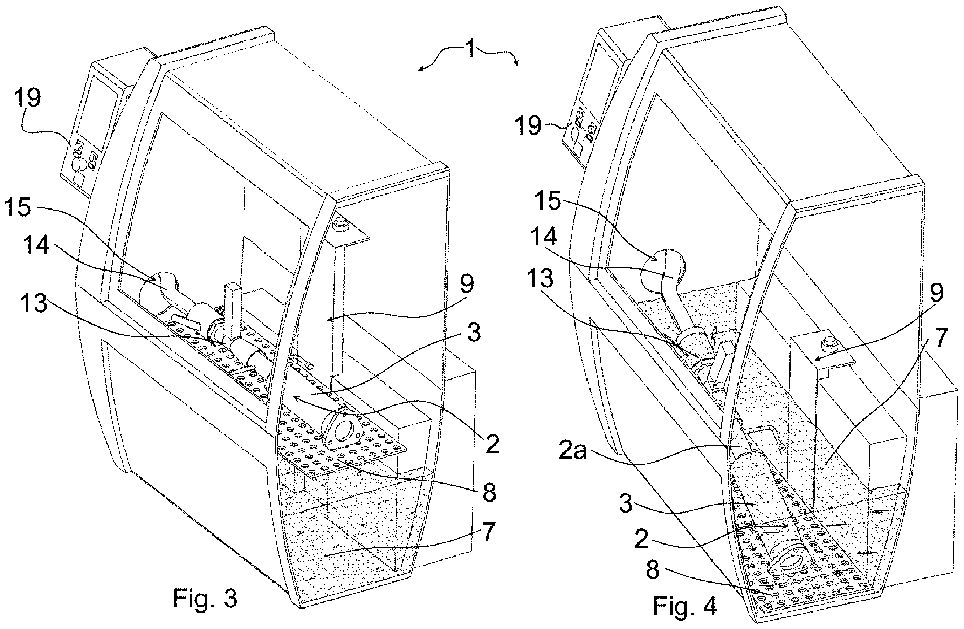

In reference to figures 3 and 4 it is more apparent which is the function of the previously described fitting 13 and through-hole 15.

In figure 3 the apparatus 1 is shown in an intermediate use configuration, i.e. with the fitting and guiding structure 9 and the platform 8 in a raised position, i.e. above the level of the detergent liquid 7, and with the fitting 13 connected to external feeding means 14 of a washing flow. The external feeding means 14 of a washing flow are herein arranged as a duct leading air and/or water to the exhaust assembly. Such external feeding means 14 contribute, together with the detergent liquid 7, to the cleaning of the exhaust assembly 2 and thus to the regeneration of the particulate filter 3. In practice, the external feeding means 14 allow the exhaust assembly 2 to be cleaned through air and/or water by moving away the particles trapped in the particulate filter 3.

For example, a mixture of air and water can be used in which the air fed through a blower has a pressure of 1-2 bars and a flow rate of 300-400 m³/h.

From the images 3 and 4 it is apparent that the through-hole 15 allows the external feeding means 14 to be inserted and disengaged in/from the booth 4. In practice in the through-hole 15 the external feeding means 14 can be inserted removably and with clearance. In practice the operator provides, after placing the exhaust assembly 2 in the booth 4, to manually insert the external feeding means 14 in the booth 4 from the outside through the through-hole 15 and to connect them, inside the booth 4, to the end 2a by using the fitting 13. Once the cleaning is completed, it is sufficient that, after loosening the fitting 13, the operator provides to separate the external feeding means 14 from the exhaust assembly 2 and to disengage them from the through-hole 14, in the direction opposite the insertion one.

In figure 4 the apparatus 1 is shown in the final configuration, i.e. in the configuration in which the cleaning of the exhaust assembly 2 occurs; as it can be seen, the fitting and guiding structure 9 and the platform 8 are in lowered position and the assembly 2, especially the filter 3, is immersed in the detergent liquid 7. The exhaust assembly 2 takes a tilted position when the apparatus 1 is in configuration of final use. The regeneration of the filter 3 occurs thanks to the combined effect of the detergent liquid 7 and air and/or water adducted to the exhaust assembly 2 through the external feeding means 14, that precisely enter in the booth 4 through the through-hole 15.

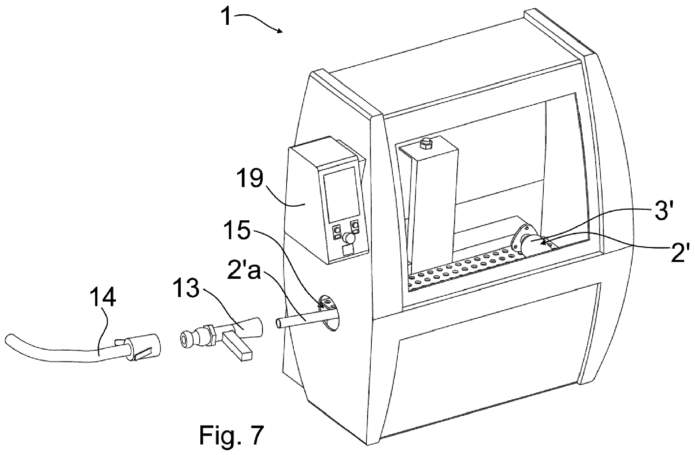

Turning to the description of the cleaning of the exhaust assembly 2', that, it is noticed, has a length larger than the exhaust assembly 2, the reader's attention is drawn to figures 6 and 7.

In particular, figure 7 shows the exhaust assembly 2' positioned in the booth 4 able to be opened. Due to its length, the exhaust assembly 2' is not completely housed inside the booth 4 but protrudes therefrom with one end 2'a through the through-hole 15.

The end 2'a is the end of the exhaust assembly 2' opposite the particulate filter 3', that remains instead housed inside the apparatus 1 in order to be immersed in the detergent liquid 7, as shown in figure 6.

In practice the end 2'a of the exhaust assembly 2' can be removably and with clearance inserted in the through-hole 15 instead of the external feeding means 14. In practice the operator provides, by placing the exhaust assembly 2' in the booth 4, to manually insert the end 2'a of the exhaust assembly 2' through the through-hole 14 from the inside, and to connect it, outside the booth 4, to the external feeding means 14 by using the fitting 13. Once the cleaning is completed, it is sufficient that, after loosening the fitting 13, the operator provides to separate the external feeding means 14 from the end 2'a and, with a movement opposite the insertion one, to disengage the end 2'a of the exhaust assembly 2 from the through-hole 15.

As shown in figure 7, in the case of cleaning an exhaust assembly 2', the fitting 13 and the external feeding means 14 are fastened to the end 2'a outside the booth 4. For this purpose the end 2'a is inserted in the through-hole 15 such that it can protrude outside the booth 4.

By comparing figure 3 and figure 7, it can be appreciated that in the through-hole 15 the external feeding means 14 or the end 2'a of the exhaust assembly 2' can be removably and with clearance inserted depending on the length of the exhaust assembly 2, 2'; in other words, the apparatus 1 allows cleaning exhaust assemblies 2, 2' of different sizes despite having a width smaller than the length of the exhaust assembly 2', which is longer. In reference to the need of connecting the end 2a or 2'a to the external feeding means 14, it is apparent thus that the through-hole 15 can have two functions: either to allow the external feeding means 14 to be inserted in the booth 4 or allow the end 2'a of the exhaust assembly 2' to protrude from the booth 4.

At the through-hole 15, outside the apparatus 1, a splash-shield cap can be fastened, not shown in the figures, delimiting or stopping the overflow of drops of the detergent liquid 7 or liquid fed from the external feeding means 14 outwards.

When the apparatus 1 is in final use configuration, i.e. when the exhaust assembly 2, 2' is connected to the external feeding means 14 and the platform 8 is in lowered position in order to immerse the filter 3, 3' in the detergent liquid 7, the exhaust assembly 2, 2' is tilted inside the booth 4.

The above described cleaning apparatus 1, provided with the through-hole 15, has the following advantages compared to the apparatuses according to the known art.

Firstly the presence of the through-hole 15 allows a cleaning apparatus 1 for exhaust assemblies 2, 2' to be made much more compact, i.e. with smaller size. In fact, since there is no need of making a cleaning apparatus 1 that allows the exhaust assemblies to be housed along their whole length, since they can protrude outside with one end thereof through the through-hole 15, the apparatus 1 can be implemented with a reduced length smaller than that of the exhaust assembly to be cleaned.

In fact, for example, the apparatus 1 can be made with a length of 150 cm and used to clean an exhaust assembly 2' of 350 cm.

By embodying a compact cleaning apparatus 1, the spatial dimensions caused by the apparatus itself can be reduced and a better handling of the working space can be obtained.

A second advantage offered by the apparatus 1 herein described is that it allows the amount of detergent liquid 7 used and the costs for the preparation and disposal thereof to be reduced, compared to the already known apparatuses.

In fact, since the apparatus 1 is compact in size, the volume of the tank 6 in which the particulate filter 3, 3' is immersed and the volume of detergent liquid 7 needed to fill the tank 6 itself are smaller than those of the known apparatuses.

Furthermore, thanks to the presence of the recirculation and filtration system of the detergent liquid 7, the above descried apparatus 1 allows further reducing the consumption of detergent liquid 7 since it is reused multiple times, after having being filtered, for cleaning the exhaust assemblies.

What described in reference to figures 1-7 is just one of the possible embodiments of the invention.

For example an apparatus for cleaning exhaust assemblies that is provided with an electric actuator and a worm gear can be made: such a variation is not shown in the figures.

In this embodiment not shown, the electric actuator rotates the worm gear in a direction and in the opposite direction, i.e. in a first rotation direction and in a second rotation direction.

Depending on the rotation direction of the worm gear, the supporting and guiding structure 9 moves downwards or upwards between a raised position, at which the platform 8 it supports is not immersed in the detergent liquid 7, and a lowered position at which the platform is immersed in the detergent liquid 7 in the tank 6.

In reference to the apparatus 1 also a method for cleaning exhaust assemblies 2, 2' is herein described.

Such a method provides, firstly, to provide the exhaust assembly 2, 2' disengaged from the respective vehicle and then to house the exhaust assembly 2, 2' in the apparatus 1 in order to clean the exhaust assembly 2, 2' and regenerate the particulate filter 3, 3'. The apparatus 1 comprises, as above described, a booth 4 able to be opened and delimiting an inner volume from the surrounding environment and a containing tank 6 of a detergent liquid 7 housed in the booth 4 in which the exhaust assembly to be cleaned can be immersed.

The apparatus 1 further comprises a through-hole 15 drilled through the booth 4.

After this step, external feeding means 14 of a washing flow are fastened to an end 2a, 2'a of the exhaust assembly 2, 2' by the fitting 13 and the exhaust assembly 2, 2' is immersed in the detergent liquid 7 of the tank 6.

Finally the external feeding means 14 of a washing flow are actuated to clean the exhaust assembly 2, 2'.

In the herein described method, the step of fastening the external feeding means 14 of a washing flow to the exhaust assembly 2, 2' can be carried out either inside the booth 4, by removably and with clearance inserting the external feeding means 14 of a washing flow in the through-hole 15, or outside the booth 4, by letting the end 2'a of the exhaust assembly 2' removably and with clearance protrude from the inside of the booth 4. In both cases, the insertion and release are carried out manually by an operator, i.e. without the need of using proper tools.

The just described method allows carrying on the cleaning of exhaust assemblies 2, 2', without the need of making the apparatus 1 with such a width to allow it to entirely accommodate the exhaust assembly 2' having larger size.

The method further allows using a smaller volume of detergent liquid 7 the exhaust assembly 2' used being the same, since of course, being the apparatus 1 more compact, the volume of tank 6 is smaller.

## Claims

1. An apparatus (1) for cleaning exhaust assemblies (2, 2') of motor vehicles, once separated from the respective vehicles, that comprises:
- a booth (4) able to be opened and delimiting an inner volume from the surrounding environment, and
- a containing tank (6), housed in the booth (4), to contain a detergent liquid (7) and in which an exhaust assembly (2, 2') to be cleaned can be immersed,
wherein a through-hole (15) is obtained through the booth (4), and **characterized in that** in the through-hole (15) can be removably inserted, with clearance:
- external feeding means (14) to feed a washing flow through the exhaust assembly (2, 2') immersed in the containing tank (6), or
- an end (2a, 2'a) of the exhaust assembly (2, 2') immersed in the containing tank (6).

2. Apparatus (1) according to claim 1, wherein the through-hole (15) is obtained in the side wall of the booth (4) above the level the detergent liquid (7) can reach in the containing tank (6).

3. Apparatus (1) according to claim 1 or claim 2, comprising a platform (8) on which at least most of the length of an exhaust assembly (2, 2') can be laid and wherein the platform is movable with respect to the containing tank (6).

4. Apparatus (1) according to claim 3, wherein the platform (8) is movable between a lowered position, at which the platform (8) is immersed in the containing tank (6), and a raised position, at which the platform (8) is not immersed in the containing tank (6) and remains above the level the detergent liquid (7) in the containing tank (6) can reach.

5. Apparatus (1) according to claim 3 or claim 4, comprising a supporting and guiding structure (9) to support and guide the platform (8) and an actuator (11), wherein the actuator (11) is outside the containing tank (6) and is connected to the platform (8) by means of the supporting and guiding structure (9).

6. Apparatus (1) according to claim 5, wherein the supporting and guiding structure (9) comprises a first portion (16) constrained to the actuator (11) by means of fastening means (10), a second portion (17) immersible in the containing tank (6), and a third portion (18) supporting the platform (8).

7. Apparatus (1) according to claim 6, wherein the actuator (11) is of pneumatic type and comprises a piston (12) that is constrained to the supporting and guiding structure (9) at the first portion (16) thereof and movable between a lowered position, at which the third portion (18) of the supporting and guiding structure (9) is immersed in the containing tank (6), and a raised position, at which the third portion (18) of the supporting and guiding structure (9) is not immersed in the containing tank (6) and remains above the level the detergent liquid (7) in the containing tank (6) can reach.

8. Apparatus (1) according to claim 6, wherein the actuator (11) is of electric type and comprises a worm gear that is constrained to the supporting and guiding structure (9) at the first horizontal portion (16) thereof and can be rotated between a first position, at which the third portion of the supporting and guiding structure (9) is immersed in the containing tank (6), and a second position, at which the portion of the supporting and guiding structure (9) is not immersed in the containing tank (6) and remains above the level the detergent liquid (7) in the containing tank (6) can reach.

9. Apparatus (1) according to any one of preceding claims 1-8, comprising adduction means and discharge means of the detergent liquid (7) and a recirculation and filtration system to recirculate and filter the detergent liquid (7) that leaves the containing tank (6) through the discharge means and enters the containing tank (6) through the adduction means, wherein the recirculation and filtration system in turn comprises a recirculation pump for the detergent liquid (7) and a filter that intercepts the particles suspended in the detergent liquid (7) that leaves the containing tank (6) through the discharge means.

10. Apparatus (1) according to any one of preceding claims 1-9, comprising a control unit (19) and an overflow sensor of the detergent liquid (7) configured to generate an alarm signal receivable by the control unit, when the level of the detergent liquid (7) in the containing tank (6) exceeds a preset level.

11. Apparatus (1) according to claim 10 comprising adduction means and discharge means of the detergent liquid (7) that can be both activated or deactivated by the control unit (19), wherein the alarm signal generated by the overflow sensor controls the activation of the discharge means or the stop of the adduction means of the detergent liquid (7).

12. Apparatus (1) according to any one of preceding claims 1-11, comprising a splash-shield cap to hold drops of detergent liquid (7), the splash-shield cap being positioned around the through-hole (15) and in a position outside the booth (4).

13. Apparatus (1) according to any one of preceding claims 1-12, wherein the exhaust assembly (2, 2') can be immersed in the containing tank (6) in a tilted position either having the end (2a, 2'a) connected inside the booth (4) to the external feeding means (14) of a washing flow , or having the end (2a, 2'a) connected outside the booth (4) to the external feeding means (14) of a washing flow, depending on the length of the exhaust assembly (2, 2') itself.

14. Method for cleaning exhaust assemblies (2, 2') of motor vehicles, comprising the steps of:
a) providing an exhaust assembly (2, 2') removed from the respective vehicle;
b) housing the exhaust assembly (2, 2') in an apparatus (1) for cleaning exhaust assemblies (2, 2'), the apparatus comprising:
- a booth (4) able to be opened and delimiting an inner volume from the surrounding environment, and
- a containing tank (6), housed in the booth (4), to contain a liquid detergent (7) and in which the exhaust assembly (2, 2') to be cleaned can be immersed,
- a through-hole (15) obtained through the booth (4),
c) connecting external feeding means (14) to feed a washing flow to one end (2a, 2'a) of the exhaust assembly (2, 2');
d) immersing the exhaust assembly (2, 2') in the containing tank (6);
e) feeding the washing flow through the exhaust assembly (2, 2'); **characterized in that** step c) is carried out
- inside the booth (4), by inserting, removably and with clearance, the external feeding means (14) of a washing flow through the through-hole (15) from the outside of the booth (4) or, alternatively, is carried out outside the booth (4) by placing, removably and with clearance, one end (2a, 2'a) of the exhaust assembly (2, 2') outside the booth (4) through the through-hole (15), depending on the length of the exhaust assembly (2, 2').

15. Method for cleaning exhaust assemblies (2, 2') of motor vehicles according to claim 14, wherein either the external feeding means (14) to feed a washing flow or one end (2a, 2'a) of the exhaust assembly (2, 2') are manually inserted by an operator in the through-hole (15) of the booth (4), without using related tools.
